# EUROPEAN PATENT APPLICATION

(11) **EP 4 769 921 A1**
(43) Date of publication of application: **01.07.2026**
(21) Application number: 24895601.3
(22) Date of filing: 25.06.2024
(51) Int. Cl.: H02M 1/08

(54) **DRIVING CIRCUIT, CONTROL APPARATUS, AND DRIVING SYSTEM**

(30) Priority: 27.11.2023 CN 202323226637 U
(71) Applicant: Contemporary Amperex Technology Co., Ltd., Ningde, Fujian 352100 (CN); Contemporary Amperex Runzhi Software Technology Limited, Ningde, Fujian 352100 (CN)
(72) Inventor: XIANG, Jingfeng, Ningde, Fujian 352100 (CN); LI, Weiqiang, Ningde, Fujian 352100 (CN)
(74) Representative: Ran, Handong
(86) International application number: PCT/CN2024/101341
(87) International publication number: WO 2025/112498

(57) **Abstract**

Disclosed in the present disclosure are a driving circuit, a control apparatus, and a driving system. The driving circuit comprises a driving control circuit and a plurality of half-bridge circuits, an output end of the driving control circuit being connected to the plurality of half-bridge circuits, wherein the driving control circuit is used for receiving a communication signal and outputting a plurality of control signals; and the plurality of half-bridge circuits are used for determining the operating states of the plurality of half-bridge circuits on the basis of the plurality of control signals, and providing a driving signal to at least one load circuit on the basis of the operating states of the plurality of half-bridge circuits, wherein the driving signal of each load circuit is provided by at least two of the plurality of half-bridge circuits. In this way, the resource occupancy of a GPIO interface of an MCU can be reduced, thereby improving the control efficiency of the circuit, and the complexity of the circuit is also reduced, thereby improving the anti-interference performance of the circuit.

## Description

### CROSS-REFERENCE TO RELATED APPLICATIONS

This disclosure is based on and claims priority to Chinese Patent Application No. 202323226637.6, filed on November 27, 2023 and entitled "DRIVE CIRCUIT, CONTROL APPARATUS, AND DRIVE SYSTEM," the entire contents of which are incorporated herein by reference.

### TECHNICAL FIELD

This disclosure relates to the field of relay technology, and in particular, to a drive circuit, a control apparatus, and a drive system.

### BACKGROUND

High-side and low-side drivers typically consist of a combination of a high-side chip and a low-side chip. They are widely used in battery management systems (BMS) for new energy vehicles, such as for relay control and vehicle lighting control. The terms "high-side" or "low-side" are defined relative to the load: when the load is on the ground side and the switch is on the power supply side, it is referred to as a high-side chip, which provides a high-side drive signal to the load; when the load is on the power supply side and the switch is on the ground side, it is referred to as a low-side chip, which provides a low-side drive signal to the load.

Currently, in related technologies, multiple sets of high-side and low-side drivers are typically used to drive loads. As a result, the microcontroller unit (Microcontroller Unit, MCU) needs to output multiple hardwired control signals to control the corresponding high-side and low-side chips to drive the load. This approach not only results in significant resource contention of the general-purpose input/output (GPIO) interfaces of MCU but also increases the circuit complexity of the BMS.

### SUMMARY

This disclosure provides a drive circuit, a control apparatus, and a drive system. By using a drive circuit including multiple half-bridge circuits to drive load circuits, it not only reduces the resource contention of GPIO interfaces of the MCU, improving circuit control efficiency, but also reduces circuit complexity, improving circuit anti-interference capability.

The technical solution of this disclosure is implemented as follows:

According to a first aspect, an embodiment of this disclosure provides a drive circuit, where the drive circuit includes a drive control circuit and multiple half-bridge circuits, and an output terminal of the drive control circuit is connected to the multiple half-bridge circuits, where:
the drive control circuit is configured to receive a communication signal and output multiple control signals.

The multiple half-bridge circuits are configured to determine an operating state of the multiple half-bridge circuits based on the multiple control signals and provide drive signals to at least one load circuit based on the operating state of the multiple half-bridge circuits, where a drive signal for each load circuit is provided by at least two of the multiple half-bridge circuits.

Through the above technical solution, by using a drive circuit including a drive control circuit and multiple half-bridge circuits to drive load circuits, the communication signal is converted into multiple control signals, enabling the driving of multiple load circuits without the MCU outputting multiple hardwired control signals. This reduces the resource contention of GPIO interfaces of the MCU, improving circuit control efficiency, and reduces circuit complexity, improving circuit anti-interference capability.

In some embodiments, the drive circuit is provided with multiple output terminals, where:
each half-bridge circuit corresponds to one output terminal, and at least two output terminals of the multiple output terminals are connected to the load circuit, where the at least two output terminals are configured to provide corresponding drive signals to the load circuit.

Through the above technical solution, the load circuit receives high-side drive signals or low-side drive signals through multiple output terminals of the drive circuit, and the output of the drive signals only occupies the output pins of the drive circuit, reducing the resource contention of GPIO interfaces of the MCU.

In some embodiments, the drive circuit includes at least one first-type half-bridge circuit and at least one second-type half-bridge circuit, where:
the at least one first-type half-bridge circuit is configured to provide a first-type drive signal to at least one load circuit; and
the at least one second-type half-bridge circuit is configured to provide a second-type drive signal to at least one load circuit.

Through the above technical solution, the multiple half-bridge circuits are divided into first-type half-bridge circuits and second-type half-bridge circuits, which provide high-side drive signals and low-side drive signals to at least one load circuit based on the communication signal, respectively. The multiple drive signals are output through the drive circuit, reducing the resource contention of GPIO interfaces of the MCU.

In some embodiments, the at least one first-type half-bridge circuit and the at least one second-type half-bridge circuit are located on the same drive chip; or
the at least one first-type half-bridge circuit is located on at least one first drive chip, and the at least one second-type half-bridge circuit is located on at least one second drive chip.

Through the above technical solution, the first-type half-bridge circuits and the second-type half-bridge circuits can be arranged on the same drive chip or on different drive chips, meeting the current demands of different load circuits and improving the flexibility of the drive circuit.

In some embodiments, when the at least one first-type half-bridge circuit and the at least one second-type half-bridge circuit are located on the same drive chip, the at least one first-type half-bridge circuit includes a first half-bridge circuit, a second half-bridge circuit, and a third half-bridge circuit, and the at least one second-type half-bridge circuit includes a fourth half-bridge circuit, a fifth half-bridge circuit, and a sixth half-bridge circuit, where:
the first half-bridge circuit and the fourth half-bridge circuit form a first H-bridge circuit configured to provide a drive signal to a first load circuit;
the second half-bridge circuit and the fifth half-bridge circuit form a second H-bridge circuit configured to provide a drive signal to a second load circuit; and
the third half-bridge circuit and the sixth half-bridge circuit form a third H-bridge circuit configured to provide a drive signal to a third load circuit.

Through the above technical solution, the first-type half-bridge circuits and the second-type half-bridge circuits are arranged on the same drive chip, forming multiple H-bridge circuits to provide drive signals to load circuits. Thus, the MCU can drive multiple load circuits through a single communication signal, reducing the resource contention of GPIO interfaces of the MCU.

In some embodiments, when the at least one first-type half-bridge circuit is located on a first drive chip and the at least one second-type half-bridge circuit is located on a second drive chip, the first drive chip includes a first half-bridge circuit, a second half-bridge circuit, a third half-bridge circuit, a fourth half-bridge circuit, a fifth half-bridge circuit, and a sixth half-bridge circuit, and the at least one second drive chip includes a seventh half-bridge circuit, an eighth half-bridge circuit, a ninth half-bridge circuit, a tenth half-bridge circuit, an eleventh half-bridge circuit, and a twelfth half-bridge circuit, where:
the first half-bridge circuit and the second half-bridge circuit are connected as a first-side half-bridge circuit, the seventh half-bridge circuit and the eighth half-bridge circuit are connected as a fourth-side half-bridge circuit, and the first-side half-bridge circuit and the fourth-side half-bridge circuit form a first H-bridge circuit configured to provide a drive signal to a first load circuit;
the third half-bridge circuit and the fourth half-bridge circuit are connected as a second-side half-bridge circuit, the ninth half-bridge circuit and the tenth half-bridge circuit are connected as a fifth-side half-bridge circuit, and the second-side half-bridge circuit and the fifth-side half-bridge circuit form a second H-bridge circuit configured to provide a drive signal to a second load circuit; and
the fifth half-bridge circuit and the sixth half-bridge circuit are connected as a third-side half-bridge circuit, the eleventh half-bridge circuit and the twelfth half-bridge circuit are connected as a sixth-side half-bridge circuit, and the third-side half-bridge circuit and the sixth-side half-bridge circuit form a third H-bridge circuit configured to provide a drive signal to a third load circuit.

Through the above technical solution, when the current of the drive signal output by a single half-bridge circuit cannot meet the drive requirements of the load circuit, the arrangement of the multiple half-bridge circuits is modified to increase the current limit of the drive signal output by the drive control circuit to the load circuit. Additionally, multiple drive chips are controlled by a single communication signal, reducing the resource contention of GPIO interfaces of the MCU.

In some embodiments, the drive circuit further includes a detection circuit, and the detection circuit is connected to the drive control circuit, where:
the detection circuit is configured to perform voltage and/or current detection on the multiple output terminals of the drive circuit and send a resulting detection signal to the drive control circuit.

Through the above technical solution, by integrating a detection circuit within the drive chip to perform voltage and/or current detection on the output drive signals, the detection process is automatically performed, avoiding the impact of abnormal output drive signals on the load circuit.

In some embodiments, the drive control circuit is further configured to receive the detection signal and, when the detection signal indicates an abnormality at an output terminal of one of the half-bridge circuits, adjust the control signal corresponding to such half-bridge circuit to adjust the operating state of such half-bridge circuit.

Through the above technical solution, the drive control circuit processes the detection signal and automatically corrects abnormalities in the multiple half-bridge circuits, reducing manual intervention and measurement costs.

According to a second aspect, an embodiment of this disclosure provides a control apparatus, where the control apparatus includes a controller and the drive circuit as described in the first aspect, where:
the controller is configured to provide a communication signal to the drive circuit; and
the drive circuit is configured to receive the communication signal, control the operating state of the multiple half-bridge circuits based on the communication signal, and provide drive signals to at least one load circuit based on the operating state of the multiple half-bridge circuits, where a drive signal for each load circuit is provided by at least two of the multiple half-bridge circuits.

Through the above technical solution, the controller outputs a single control signal, and the multiple half-bridge circuits in the drive circuit output multiple drive signals to drive the load circuits, reducing the resource contention of GPIO interfaces of the controller.

In some embodiments, when the multiple half-bridge circuits in the drive circuit are located on at least one drive chip, a communication terminal of the at least one drive chip is connected to a communication terminal of the controller to receive the communication signal sent by the controller.

Through the above technical solution, multiple drive chips reuse a single communication signal and communication pin from the controller to drive multiple load circuits, reducing the resource contention of GPIO interfaces of the controller.

According to a third aspect, an embodiment of this disclosure provides a drive system, where the drive system includes a relay and the control apparatus as described in the second aspect, and the control apparatus is configured to control a switching state of the relay.

Through the above technical solution, the control apparatus controls the switching state of the relay. Compared to the control method of using a combination of a high-side chip and a low-side chip in related technologies, this reduces the resource contention of GPIO interfaces of the controller in the control apparatus, lowers the complexity of the drive control circuit, and improves control efficiency and anti-interference capability.

This disclosure provides a drive circuit, a control apparatus, and a drive system. Through the drive control circuit, the communication signal input by the MCU is converted into multiple control signals to control the multiple half-bridge circuits to output drive signals, serving as the drive for multiple load circuits. Thus, without the MCU outputting multiple hardwired control signals, multiple load circuits can be driven, reducing the resource contention of GPIO interfaces of the MCU, improving circuit control efficiency, reducing circuit complexity, and improving circuit anti-interference capability.

### BRIEF DESCRIPTION OF DRAWINGS

FIG. 1 is a schematic diagram of a workflow of a high-side and low-side driver;
FIG. 2 is a first schematic diagram of an assembled structure of a drive circuit according to an embodiment of this disclosure;
FIG. 3 is a second schematic diagram of an assembled structure of a drive circuit according to an embodiment of this disclosure;
FIG. 4 is a third schematic diagram of an assembled structure of a drive circuit according to an embodiment of this disclosure;
FIG. 5 is a fourth schematic diagram of an assembled structure of a drive circuit according to an embodiment of this disclosure;
FIG. 6 is a fifth schematic diagram of an assembled structure of a drive circuit according to an embodiment of this disclosure;
FIG. 7 is a sixth schematic diagram of an assembled structure of a drive circuit according to an embodiment of this disclosure;
FIG. 8 is a first schematic diagram of an assembled structure of a control apparatus according to an embodiment of this disclosure;
FIG. 9 is a second schematic diagram of an assembled structure of a control apparatus according to an embodiment of this disclosure; and
FIG. 10 is a schematic diagram of an assembled structure of a drive system according to an embodiment of this disclosure.

### DESCRIPTION OF EMBODIMENTS

To provide a more detailed understanding of the features and technical content of the embodiments of this disclosure, the implementation of the embodiments is described in detail below with reference to the accompanying drawings, which are provided for reference and illustration only and are not intended to limit the embodiments of this disclosure.

Unless otherwise defined, all technical and scientific terms used herein have the same meaning as commonly understood by those skilled in the technical field of this disclosure. The terms used herein are solely for the purpose of describing the embodiments of this disclosure and are not intended to limit this disclosure.

In the following description, references to "some embodiments" describe a subset of all possible embodiments. However, it should be understood that "some embodiments" may refer to the same or different subsets of all possible embodiments and can be combined with each other without conflict. It should also be noted that the terms "first\second\third" used in the embodiments of this disclosure are only used to distinguish similar objects and do not represent a specific order for the objects. It can be understood that "first\second\third" may be interchanged in specific order or sequence, allowing the embodiments described herein to be implemented in an order other than that illustrated or described herein.

In new energy vehicles, a BMS typically includes multiple load circuits, each load circuit being driven by a set of high-side and low-side chips. A set of high-side and low-side drivers generally consists of one high-side chip and one low-side chip, where the high-side chip is a chip with a switching element located between the power supply and the load, and the low-side chip is a chip with a switching element located between the load and the common terminal. These can be applied in scenarios such as relay driving, light-emitting diode (LED) driving, and optocoupler driving.

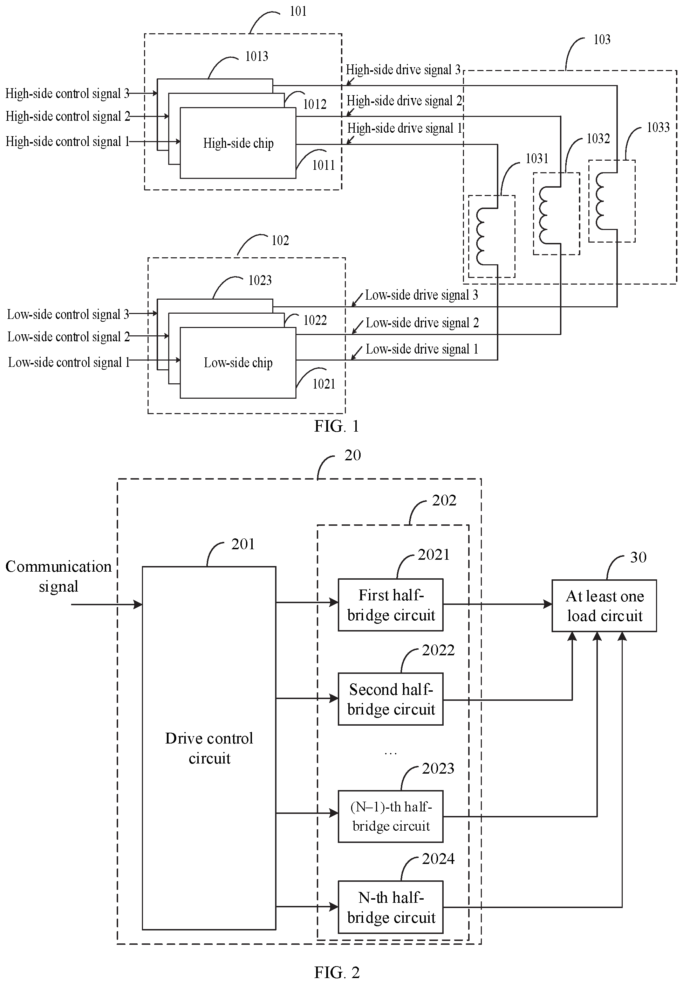

FIG. 1 is a schematic diagram of a workflow of a high-side and low-side driver. For example, as shown in FIG. 1, with a high-side chip group 101 containing three high-side chips and a low-side chip group 102 containing three low-side chips, forming three sets of high-side and low-side drivers to drive three load circuits in a load circuit group 103, the operation process of the high-side and low-side drivers is described. It should be understood that each set of high-side and low-side drivers is used to drive one load circuit in the load circuit group 103. In practical applications, the number of chips in the high-side chip group 101 and the low-side chip group 102 can be set based on the number of load circuits to be driven in the load circuit group 103.

Referring to FIG. 1, the high-side chip group 101 and the low-side chip group 102 together drive the load circuit group 103, and the high-side chip group 101 and the low-side chip group 102 need to control the activation and deactivation of multiple chips in the high-side chip group 101 and the low-side chip group 102 based on multiple independent hardwired control signals output by the MCU, including high-side drive signal 1, high-side drive signal 2, high-side drive signal 3, low-side drive signal 1, low-side drive signal 2, low-side drive signal 3, and the like. Each high-side chip in the high-side chip group 101 forms a set of high-side and low-side drivers with a corresponding low-side chip in the low-side chip group 102, providing a high-side drive signal and a low-side drive signal to a specific load circuit in the load circuit group 103 to drive that load circuit.

As shown in FIG. 1, the first high-side chip 1011 receives high-side control signal 1, and the first low-side chip 1021 receives low-side control signal 1, enabling the first high-side chip 1011 to output high-side drive signal 1 to the first load circuit 1031 based on high-side control signal 1, and the first low-side chip 1021 to output low-side drive signal 1 to the first load circuit 1031 to drive the first load circuit 1031. Similarly, the second high-side chip 1012 receives high-side control signal 2 and outputs high-side drive signal 2, and the second low-side chip 1022 receives low-side control signal 2 and outputs low-side drive signal 2 to drive the second load circuit 1032. The third high-side chip 1013 receives high-side control signal 3 and outputs high-side drive signal 3, and the third low-side chip 1023 receives low-side control signal 3 and outputs low-side drive signal 3 to drive the third load circuit 1033. It should be understood that when multiple load circuits in the load circuit group 103 need to be driven, multiple high-side drive signals and multiple low-side drive signals must be output by the high-side chip group 101 and the low-side chip group 102 based on multiple hardwired control signals to drive the corresponding load circuits. This method of driving load circuits results in relatively significant resource contention of GPIO interfaces of the MCU.

Based on the above technical problem, the embodiments of this disclosure provide a drive circuit, a control apparatus, and a drive system that can convert the communication signal input by the MCU into multiple control signals through the drive control circuit to control the multiple half-bridge circuits to output drive signals, serving as the drive for multiple load circuits. Thus, without the MCU outputting multiple hardwired control signals, multiple load circuits can be driven, reducing the resource contention of GPIO interfaces of the MCU, improving circuit control efficiency, reducing circuit complexity, and improving circuit anti-interference capability.

The disclosure is further described in detail below with reference to the accompanying drawings and specific embodiments.

FIG. 2 is a first schematic diagram of an assembled structure of a drive circuit according to an embodiment of this disclosure. As shown in FIG. 2, the drive circuit 20 includes a drive control circuit 201 and multiple half-bridge circuits 202, where an output terminal of the drive control circuit 201 is connected to the multiple half-bridge circuits 202.

The drive control circuit 201 is configured to receive a communication signal and output multiple control signals.

The drive control circuit 201 may be a unit within the drive circuit 20 with data processing capabilities, also referred to as a control logic module, configured to perform logical judgments based on the level state of the communication signal input by the MCU and output corresponding multiple control signals.

The MCU can connect to the drive circuit 20 through a single serial peripheral interface (Serial Peripheral Interface, SPI) to output a communication signal to the drive circuit. As shown in FIG. 2, after the drive circuit 20 receives the communication signal sent by the MCU, the drive control circuit 201 processes the communication signal to generate multiple control signals, which are respectively input to the multiple half-bridge circuits 202 connected to the drive control circuit 201, including the first half-bridge circuit 2021, the second half-bridge circuit 2022, ..., and the N-th half-bridge circuit 2023, controlling the operating state of each of the multiple half-bridge circuits 202.

The multiple half-bridge circuits 202 are configured to determine the operating state of the multiple half-bridge circuits 202 based on the multiple control signals and provide drive signals to at least one load circuit 30 based on the operating state of the multiple half-bridge circuits 202, where a drive signal for each load circuit of at least one load circuit 30 is provided by at least two of the multiple half-bridge circuits 202.

As shown in FIG. 2, the multiple half-bridge circuits 202 may include half-bridge circuits with identical structures such as a first half-bridge circuit 2021, a second half-bridge circuit 2022, ..., an (N-1)-th half-bridge circuit 2023, and an N-th half-bridge circuit 2024, where N is an even number greater than 1. It should be understood that the specific number of half-bridge circuits can be determined based on the requirements of the load circuits and is not specifically limited herein.

A half-bridge circuit may be a structure composed of two power switching devices, capable of determining different operating states based on the control signals output by the drive control circuit 201, outputting a high-side drive signal or a low-side drive signal to drive at least one load circuit 30. As described in the above embodiments, the operating state of the half-bridge circuit can be determined based on the control signal, with different drive signals output based on different operating states. For example, when the control signal is at a high level, the half-bridge circuit is in a first operating state and can provide multiple high-side drive signals to at least one load circuit 30; and when the control signal is at a low level, the half-bridge circuit is in a second operating state and can provide multiple low-side drive signals to at least one load circuit 30.

For example, referring to FIG. 2, based on the control signals from the drive control circuit 201, the first half-bridge circuit 2021 and the second half-bridge circuit 2022 may be in the first operating state, providing high-side drive signals to at least one load circuit 30; and the (N-1)-th half-bridge circuit 2023 and the N-th half-bridge circuit 2024 may be in the second operating state, providing low-side drive signals to at least one load circuit 30. The first half-bridge circuit 2021 and the (N-1)-th half-bridge circuit 2023 form a set of high-side and low-side drivers, providing a high-side drive signal and a low-side drive signal to a corresponding load circuit in at least one load circuit 30; and the second half-bridge circuit 2022 and the N-th half-bridge circuit 2024 form another set of high-side and low-side drivers, providing a high-side drive signal and a low-side drive signal to another corresponding load circuit in at least one load circuit 30. It should be understood that multiple half-bridge circuits between the second half-bridge circuit 2022 and the (N-1)-th half-bridge circuit 2023 can also form multiple sets of high-side and low-side drivers in pairs, providing high-side drive signals and low-side drive signals to corresponding load circuits in at least one load circuit 30.

It should be noted that FIG. 2 illustrates only one connection configuration between the drive circuit and the load circuits. When the number of half-bridge circuits in the drive circuit increases or decreases, the number of load circuits correspondingly increases or decreases. Additionally, based on the relationship between the current drive requirements of the drive circuit and the load circuits, a single load circuit can be driven by two half-bridge circuits, that is, one set of high-side and low-side drivers, or driven by multiple half-bridge circuits, that is, multiple sets of high-side and low-side drivers, but it must include at least one half-bridge circuit for outputting a high-side drive signal and one half-bridge circuit for outputting a low-side drive signal.

The embodiments of this disclosure provide the drive circuit, where the drive circuit, including the drive control circuit and multiple half-bridge circuits, serves as the drive of the load circuits, converting a communication signal into multiple control signals. This enables the driving of multiple load circuits without the MCU outputting multiple hardwired control signals, reducing the resource contention of GPIO interfaces of the MCU, improving circuit control efficiency, reducing circuit complexity, and improving circuit anti-interference capability.

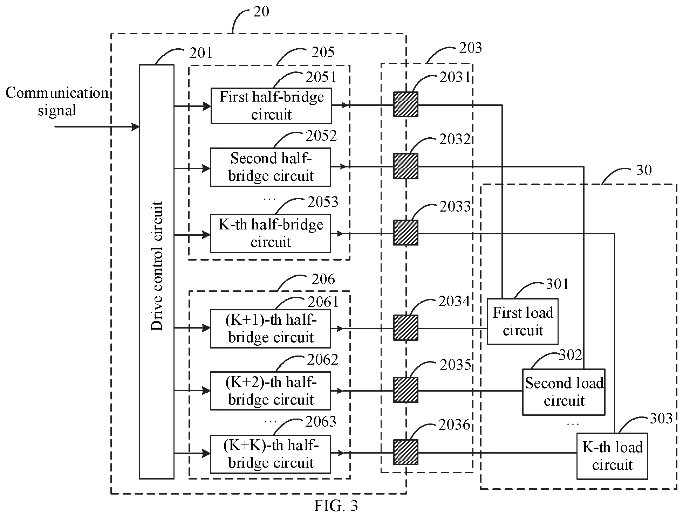

In another embodiment of this disclosure, FIG. 3 is a second schematic diagram of an assembled structure of a drive circuit according to an embodiment of this disclosure. As shown in FIG. 3, the drive circuit 20 is provided with multiple output terminals 203, where:
each half-bridge circuit corresponds to one output terminal, at least two output terminals of the multiple output terminals 203 are connected to at least one load circuit 30, and the at least two output terminals are configured to provide corresponding drive signals to the load circuit.

The drive circuit 20 may be a circuit composed of at least one drive chip, where the output terminals of the drive circuit 20 may refer to the connection terminals drawn from the interior of the at least one drive chip to external circuits. It should be noted that the multiple output terminals 203 of the output circuit may be provided by a single drive chip or by multiple drive chips.

As shown in FIG. 3, each half-bridge circuit is connected to a corresponding output terminal for outputting a high-side drive signal or a low-side drive signal to the load circuit through the corresponding output terminal. For example, the first half-bridge circuit 2051 is connected to the first output terminal 2031 for outputting a high-side drive signal, and the (K+1)-th half-bridge circuit 2061 is connected to the (K+1)-th output terminal 2034 for outputting a low-side drive signal. The first output terminal 2031 and the (K+1)-th output terminal 2034 are connected to the first load circuit 301, inputting the high-side drive signal and the low-side drive signal to the first load circuit 301, respectively. Similarly, the second output terminal 2032 corresponds to the second half-bridge circuit 2052, and the (K+2)-th output terminal 2035 corresponds to the (K+2)-th half-bridge circuit 2062, respectively used to output a high-side drive signal and a low-side drive signal to the second load circuit 302. The K-th output terminal 2033 corresponds to the K-th half-bridge circuit 2053, and the (K+K)-th output terminal 2036 corresponds to the (K+K)-th half-bridge circuit 2063, each used to output a high-side drive signal to the K-th load circuit 303.

It should be understood that multiple half-bridge circuits may exist between the second half-bridge circuit 2052 and the K-th half-bridge circuit 2053, corresponding to multiple output terminals, outputting multiple high-side drive signals to at least one load circuit 30; and multiple half-bridge circuits may also exist between the (K+2)-th half-bridge circuit 2062 and the (K+K)-th half-bridge circuit 2063, corresponding to multiple output terminals, outputting multiple low-side drive signals to at least one load circuit 30, where K is an integer greater than 1, and its specific value can be set based on the number and requirements of at least one load circuit 30.

It should be noted that, depending on the current demands of the drive signals for at least one load circuit 30, a single load circuit may be connected to more than two output terminals, with drive signals provided by more than two half-bridge circuits corresponding to those output terminals, and is not limited to the case shown in FIG. 3 where a single load circuit is connected to two output terminals.

As described in the previous embodiments, the MCU provides a communication signal to the drive circuit 20 through a single SPI. As shown in FIG. 3, the drive circuit 20 may also be provided with an input terminal for receiving the communication signal provided by the MCU.

It should be noted that the drive circuit 20 may be a circuit composed of at least one drive chip, and the input terminal of the drive circuit 20 may refer to the connection terminal provided on each of the at least one drive chip for connecting to the MCU. Notably, the input terminal on each drive chip is connected to the communication pin of the MCU, thereby reducing the resource contention of GPIO interfaces of the MCU.

In some embodiments, continuing to refer to FIG. 3, the drive circuit 20 includes at least one first-type half-bridge circuit 205 and at least one second-type half-bridge circuit 206.

The at least one first-type half-bridge circuit 205 is configured to provide a first-type drive signal to at least one load circuit 30; and the at least one second-type half-bridge circuit 206 is configured to provide a second-type drive signal to at least one load circuit.

In an embodiment of this disclosure, the first-type drive signal may be a high-side drive signal, and the second-type drive signal may be a low-side drive signal.

As shown in FIG. 3, the multiple half-bridge circuits in the drive circuit 20 may be divided into first-type half-bridge circuits and second-type half-bridge circuits, where the at least one first-type half-bridge circuit 205 may include the first half-bridge circuit 2051, the second half-bridge circuit 2052, ..., and the K-th half-bridge circuit 2053, all configured to output high-side drive signals; and the at least one second-type half-bridge circuit 206 may include the (K+1)-th half-bridge circuit 2061, the (K+2)-th half-bridge circuit 2062, ..., and the (K+K)-th half-bridge circuit 2063, all configured to output low-side drive signals.

The assembled structure of each half-bridge circuit in the first-type half-bridge circuits and the second-type half-bridge circuits may be identical, for example, composed of two gate driver modules and two NMOS transistors. Whether a half-bridge circuit belongs to the first-type or second-type half-bridge circuit can be determined by the control signal such half-bridge circuit receives and the drive signal such half-bridge circuit outputs. For example, as shown in FIG. 3, the drive control circuit 201 sends a high-level control signal to the first half-bridge circuit 2051, the second half-bridge circuit 2052, ..., and the K-th half-bridge circuit 2053, causing the multiple first-type half-bridge circuits 205 to send high-side drive signals to the first load circuit 301, the second load circuit 302, and the third load circuit 303, respectively; and the drive control circuit 201 sends a low-level control signal to the (K+1)-th half-bridge circuit 2061, the (K+2)-th half-bridge circuit 2062, ..., and the (K+K)-th half-bridge circuit 2063, causing these half-bridge circuits to send low-side drive signals to the first load circuit 301, the second load circuit 302, and the third load circuit 303, respectively. Therefore, in an embodiment of this disclosure, the first half-bridge circuit 2051, the second half-bridge circuit 2052, ..., and the K-th half-bridge circuit 2053 may be first-type half-bridge circuits, and the (K+1)-th half-bridge circuit 2061, the (K+2)-th half-bridge circuit 2062, ..., and the (K+K)-th half-bridge circuit 2063 may be second-type half-bridge circuits.

In some embodiments, the at least one first-type half-bridge circuit 205 and the at least one second-type half-bridge circuit 206 are located on the same drive chip; or the at least one first-type half-bridge circuit 205 is located on at least one first drive chip, and the at least one second-type half-bridge circuit 206 is located on at least one second drive chip.

As described in the previous embodiments, the drive circuit 20 may be composed of multiple drive chips, and each drive chip may include multiple half-bridge circuits. It should be noted that the drive circuit 20 may include only one type of drive chip, where in a case of multiple half-bridge circuits on each drive chip, a portion of the half-bridge circuits on each drive chip can be configured as first-type half-bridge circuits 205, and the remaining half-bridge circuits can be configured as second-type half-bridge circuits 206. The drive circuit 20 may also include two types of drive chips: first drive chips and second drive chips, where multiple half-bridge circuits in each first drive chip can be all configured as first-type half-bridge circuits 205, and multiple half-bridge circuits in each second drive chip can be all configured as second-type half-bridge circuits 206.

It should be understood that the number of half-bridge circuits included in the first-type half-bridge circuits 205 may be the same as the number of half-bridge circuits included in the second-type half-bridge circuits 206.

The embodiments of this disclosure provide the drive circuit including at least one first-type half-bridge circuit and at least one second-type half-bridge circuit, which provide high-side drive signals and low-side drive signals to load circuits, respectively. The first-type half-bridge circuits and the second-type half-bridge circuits can be arranged on the same drive chip or on different drive chips, meeting the current demands of different load circuits and improving the flexibility of the drive circuit.

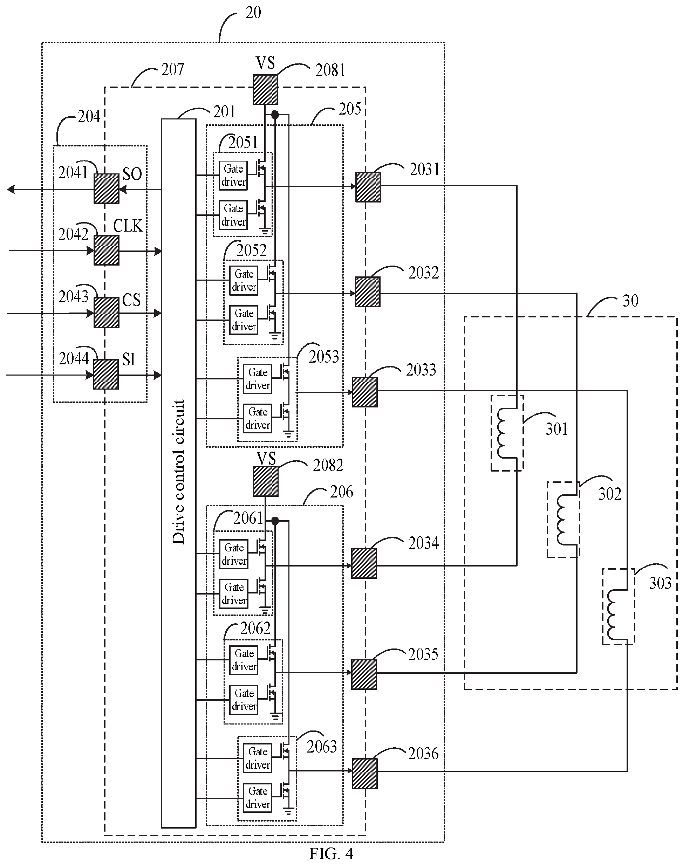

In another embodiment of this disclosure, FIG. 4 is a third schematic diagram of an assembled structure of a drive circuit according to an embodiment of this disclosure. As shown in FIG. 4, when the at least one first-type half-bridge circuit 205 and the at least one second-type half-bridge circuit 206 are located on the same drive chip 207, the at least one first-type half-bridge circuit 205 includes a first half-bridge circuit 2051, a second half-bridge circuit 2052, and a third half-bridge circuit 2053, and the at least one second-type half-bridge circuit 206 includes a fourth half-bridge circuit 2061, a fifth half-bridge circuit 2062, and a sixth half-bridge circuit 2063.

As shown in FIG. 4, in an embodiment of this disclosure, the drive circuit 20 is described as including one drive chip 207, with the drive chip 207 containing six half-bridge circuits. It should be understood that the drive circuit 20 may include multiple such drive chips 207, where each drive chip 207 may include multiple half-bridge circuits, the multiple half-bridge circuits including at least one first-type half-bridge circuit and one second-type half-bridge circuit, and the number of half-bridge circuits can be determined based on the number and requirements of at least one load circuit 30.

The first half-bridge circuit 2051 and the fourth half-bridge circuit 2061 form a first H-bridge circuit configured to provide a drive signal to a first load circuit 301; the second half-bridge circuit 2052 and the fifth half-bridge circuit 2062 form a second H-bridge circuit configured to provide a drive signal to a second load circuit 302; and the third half-bridge circuit 2053 and the sixth half-bridge circuit 2063 form a third H-bridge circuit configured to provide a drive signal to a third load circuit 303.

As described in the previous embodiments, each half-bridge circuit may be composed of two gate driver modules and two NMOS transistors. As shown in FIG. 4, taking the first half-bridge circuit 2051 as an example, one end of each of the two gate driver modules is connected to the drive control circuit 201, the other ends of the two gate driver modules are respectively connected to the gate terminals of the two NMOS transistors, and in these two NMOS transistors, the drain terminal of the first NMOS transistor is connected to the first power supply terminal 2081, the source terminal of the first NMOS transistor is connected to the drain terminal of the second NMOS transistor, and the source terminal of the second NMOS transistor is grounded. Notably, the internal connections of the second half-bridge circuit 2052, the third half-bridge circuit 2053, the fourth half-bridge circuit 2061, the fifth half-bridge circuit 2062, and the sixth half-bridge circuit 2063 are similar to those of the first half-bridge circuit 2051 and are not described in detail here.

In an embodiment of this disclosure, the first H-bridge circuit, the second H-bridge circuit, and the third H-bridge circuit may each be a set of high-side and low-side drivers, with each H-bridge circuit providing a high-side drive signal and a low-side drive signal to the same load circuit. For example, the first half-bridge circuit 2051 provides a high-side drive signal to the first load circuit 301, and the fourth half-bridge circuit 2061 provides a low-side drive signal to the first load circuit 301 to drive the first load circuit 301; the second half-bridge circuit 2052 provides a high-side drive signal to the second load circuit 302, and the fifth half-bridge circuit 2062 provides a low-side drive signal to the second load circuit 302 to drive the second load circuit 302; and the third half-bridge circuit 2053 provides a high-side drive signal to the third load circuit 303, and the third load circuit 303 provides a low-side drive signal to the third load circuit 303 to drive the third load circuit 303.

It should be understood that if the drive chip 207 includes more than six half-bridge circuits, multiple H-bridge circuits can be formed in the connection manner shown in FIG. 4 to provide drive signals to at least one load circuit 30. Additionally, a single H-bridge circuit may include more than two half-bridge circuits.

As described in the previous embodiments, each drive chip may include multiple input terminals 204. As shown in FIG. 4, the multiple input terminals 204 include: an SO input terminal 2041, an SI input terminal 2042, a CLK input terminal 2043, and a CS input terminal 2044. The SO input terminal 2041 is a master-in/slave-out interface used to send data related to the execution status of the drive circuit 20 back to the MCU; the SI input terminal 2042is a master-out/slave-in interface used to send the communication signal for controlling the drive circuit 20 from the MCU to the drive circuit 20; and the CLK input terminal 2043is a clock synchronization interface used to synchronize the clocks of multiple drive chips in the drive circuit 20 through a clock signal; and the CS input terminal 2044is a chip select interface used to determine which drive chip in the drive circuit 20 is controlled through a chip select signal sent by the MCU.

It should be understood that FIG. 4 illustrates the connection method of multiple input terminals 204 with the drive circuit 20 including one drive chip as an example. If the drive circuit 20 includes multiple drive chips, each drive chip has multiple input terminals 204 as shown in FIG. 4 for receiving the communication signal.

It should be noted that the drive circuit 20 may also include multiple power supply terminals, all connected to an external power supply, allowing the power supply to provide power to the multiple half-bridge circuits in the drive circuit 20 through the multiple power supply terminals. For example, as shown in FIG. 4, the multiple power supply terminals may include a first power supply terminal 2081 and a second power supply terminal 2082. It should be understood that each drive chip in the drive circuit 20 may be provided with at least one power supply terminal connected to the power supply. Additionally, the power supply voltages of the power supply connected to the first power supply terminal 2081 and the second power supply terminal 2082 may be the same or different, depending on the power supply voltage requirements of the drive chip.

An embodiment of this disclosure provides a drive circuit where the first-type half-bridge circuits and the second-type half-bridge circuits are arranged on the same drive chip, forming multiple H-bridge circuits to provide drive signals to load circuits. Thus, the MCU can drive multiple load circuits through a single communication signal, reducing the resource contention of GPIO interfaces of the MCU.

It should be understood that the drive circuit includes one drive chip, and the multiple half-bridge circuits on this drive chip form multiple H-bridge circuits in pairs, with each H-bridge circuit having one first-type half-bridge circuit outputting a high-side drive signal and another second-type half-bridge circuit outputting a low-side drive signal to drive a load circuit. However, there may be cases where the upper current limit of the drive signal output by a single half-bridge circuit cannot meet the drive requirements of the load circuit, necessitating the paralleling of drive signals from multiple half-bridge circuits to provide a larger drive current to drive the same load circuit.

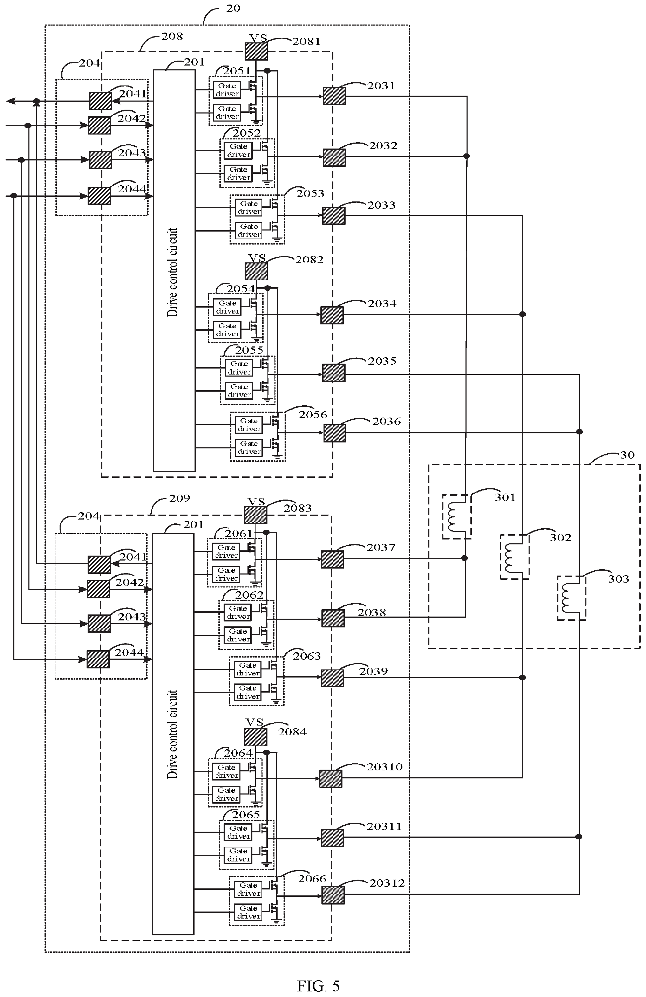

In another embodiment of this disclosure, FIG. 5 is a fourth schematic diagram of an assembled structure of a drive circuit according to an embodiment of this disclosure. As shown in FIG. 5, when the at least one first-type half-bridge circuit is located on a first drive chip 208 and the at least one second-type half-bridge circuit is located on a second drive chip 209, the first drive chip 208 includes a first half-bridge circuit 2051, a second half-bridge circuit 2052, a third half-bridge circuit 2053, a fourth half-bridge circuit 2054, a fifth half-bridge circuit 2055, and a sixth half-bridge circuit 2056, and the at least one second drive chip 209 includes a seventh half-bridge circuit 2061, an eighth half-bridge circuit 2062, a ninth half-bridge circuit 2063, a tenth half-bridge circuit 2064, an eleventh half-bridge circuit 2065, and a twelfth half-bridge circuit 2066.

As described in the foregoing embodiments, whether a half-bridge circuit belongs to the first-type half-bridge circuit or second-type half-bridge circuit can be determined by the control signal such half-bridge circuit receives and the drive signal such half-bridge circuit outputs. All the half-bridge circuits on the first drive chip 208 can be configured as first-type half-bridge circuits, outputting multiple high-side drive signals to at least one load circuit 30 after receiving a high-level control signal from the drive control circuit 201; and all the half-bridge circuits on the second drive chip 209 can be configured as second-type half-bridge circuits, outputting multiple low-side drive signals to at least one load circuit 30 after receiving a low-level control signal from the drive control circuit 201. It should be understood that the number of first drive chips 208 and second drive chips 209 in the drive circuit 20 can be specifically determined based on the number and requirements of the load circuits.

The first half-bridge circuit 2051 and the second half-bridge circuit 2052 are connected as a first-side half-bridge circuit, the seventh half-bridge circuit 2061 and the eighth half-bridge circuit 2062 are connected as a fourth-side half-bridge circuit, and the first-side half-bridge circuit and the fourth-side half-bridge circuit form a first H-bridge circuit configured to provide a drive signal to a first load circuit 301.

In an embodiment of this disclosure, the first half-bridge circuit 2051 and the second half-bridge circuit 2052 are both first-type half-bridge circuits, outputting high-side drive signals through the first output terminal 2031 and the second output terminal 2032, respectively, and inputting them in parallel to the first load circuit 301; the seventh half-bridge circuit 2061 and the eighth half-bridge circuit 2062 are both second-type half-bridge circuits, outputting low-side drive signals through the seventh output terminal 2037 and the eighth output terminal 2038, respectively, and inputting them in parallel to the first load circuit 301. Thus, these four half-bridge circuits, paired in parallel, form the first H-bridge circuit, which is a set of high-side and low-side drivers, used to drive the first load circuit 301.

The third half-bridge circuit 2053 and the fourth half-bridge circuit 2054 are connected as a second-side half-bridge circuit, the ninth half-bridge circuit 2063 and the tenth half-bridge circuit 2064 are connected as a fifth-side half-bridge circuit, and the second-side half-bridge circuit and the fifth-side half-bridge circuit form a second H-bridge circuit configured to provide a drive signal to a second load circuit 302.

In an embodiment of this disclosure, the third half-bridge circuit 2053 and the fourth half-bridge circuit 2054 are both first-type half-bridge circuits, outputting high-side drive signals through the third output terminal 2033 and the fourth output terminal 2034, respectively, and inputting them in parallel to the second load circuit 302; and the ninth half-bridge circuit 2063 and the tenth half-bridge circuit 2064 are both second-type half-bridge circuits, outputting low-side drive signals through the ninth output terminal 2039 and the tenth output terminal 20310, respectively, and inputting them in parallel to the second load circuit 302. Thus, these four half-bridge circuits, paired in parallel, form the second H-bridge circuit, which is a set of high-side and low-side drivers, used to drive the second load circuit 302.

The fifth half-bridge circuit 2055 and the sixth half-bridge circuit 2056 are connected as a third-side half-bridge circuit, the eleventh half-bridge circuit 2065 and the twelfth half-bridge circuit 2066 are connected as a sixth-side half-bridge circuit, and the third-side half-bridge circuit and the sixth-side half-bridge circuit form a third H-bridge circuit configured to provide a drive signal to a third load circuit 303.

In an embodiment of this disclosure, the fifth half-bridge circuit 2055 and the sixth half-bridge circuit 2056 are both first-type half-bridge circuits, outputting high-side drive signals through the fifth output terminal 2035 and the sixth output terminal 2036, respectively, and inputting them in parallel to the third load circuit 303; and the eleventh half-bridge circuit 2065 and the twelfth half-bridge circuit 2066 are both second-type half-bridge circuits, outputting low-side drive signals through the eleventh output terminal 20311 and the twelfth output terminal 20312, respectively, and inputting them in parallel to the third load circuit 303. Thus, these four half-bridge circuits, paired in parallel, form the third H-bridge circuit, which is a set of high-side and low-side drivers, used to drive the third load circuit 303.

It should be understood that, depending on the current demands of the load circuits for drive signals and the upper current limit of the drive signal output by each half-bridge circuit, the correspondence between the number of half-bridge circuits and load circuits in the drive chip can be adjusted accordingly and is not limited to the connection methods in the above embodiments.

Additionally, as shown in FIG. 5, each first drive chip 208 and each second drive chip 209 in the drive circuit may include multiple input terminals 204, and the multiple input terminals 204 on different drive chips can all be connected to the same set of communication interfaces of the MCU to receive the communication signal sent by the MCU.

An embodiment of this disclosure provides a drive circuit that, when the current of the drive signal output by a single half-bridge circuit cannot meet the drive requirements of the load circuit, modifies the arrangement of the multiple half-bridge circuits to increase the upper current limit of the drive signal output by the drive control circuit to the load circuit. Additionally, multiple drive chips are controlled by a single communication signal, reducing the resource contention of GPIO interfaces of the MCU.

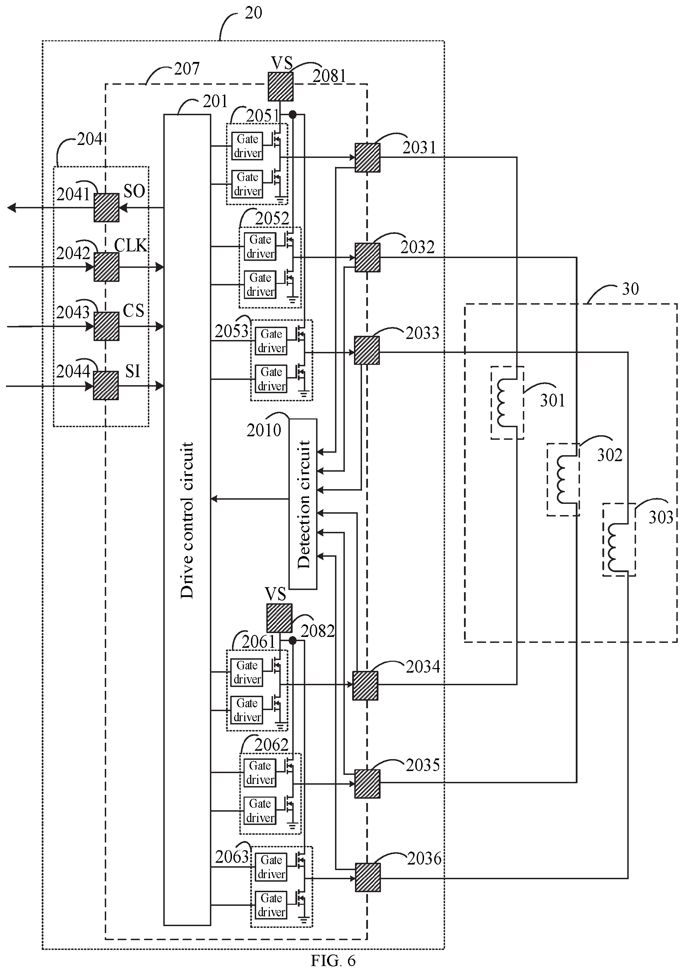

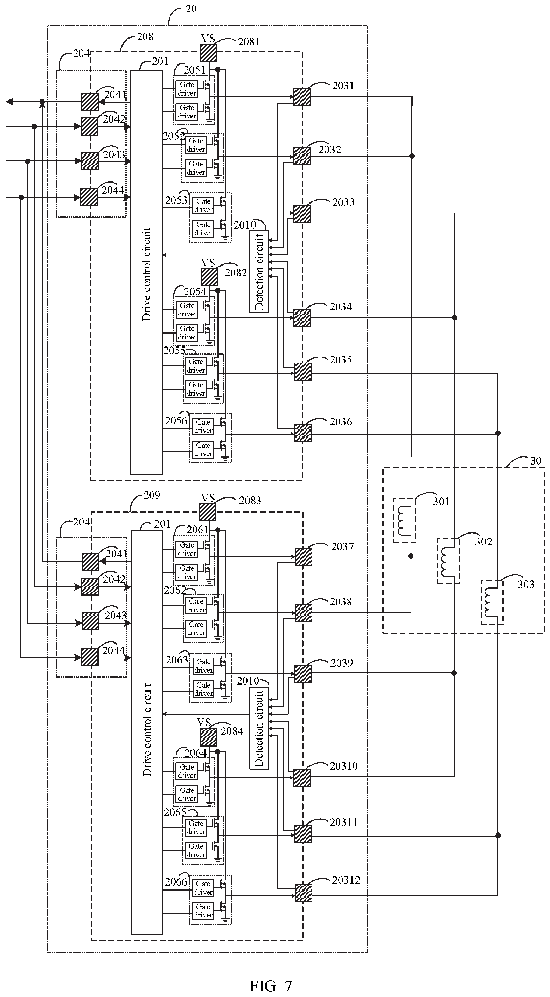

In another embodiment of this disclosure, as shown in FIG. 6 and FIG. 7, the drive circuit 20 further includes a detection circuit 2010, where the detection circuit 2010 is connected to the drive control circuit 201.

In an embodiment of this disclosure, FIG. 5 illustrates the drive circuit 20 with one drive chip 207 as an example, and FIG. 6 illustrates the drive circuit 20 with one first drive chip 208 and one second drive chip 209 as an example, explaining the operating principle and connection method of the detection circuit 2010 in the drive circuit 20. It should be understood that when the drive circuit 20 includes multiple drive chips, each drive chip may also include a detection circuit 2010, with the same operating principle and connection method as those of the detection circuit 2010 in FIG. 6 and FIG. 7.

The detection circuit 2010 is configured to perform voltage and/or current detection on the multiple output terminals of the drive circuit 20 and send a resulting detection signal to the drive control circuit 201.

FIG. 6 is a fifth schematic diagram of an assembled structure of a drive circuit according to an embodiment of this disclosure. Referring to FIG. 6, when the drive circuit 20 includes one drive chip 207, the detection circuit 2010 may be arranged inside the drive chip 207, connected to the multiple output terminals on the drive chip 207 or directly connected to the lines outputting drive signals from the multiple half-bridge circuits in the drive chip 207, to acquire the high-side drive signals or low-side drive signals output by the multiple half-bridge circuits in the drive chip 207 and perform voltage and/or current detection, generating a detection signal based on the detection results.

FIG. 7 is a sixth schematic diagram of an assembled structure of a drive circuit according to an embodiment of this disclosure. Referring to FIG. 7, when the drive circuit 20 includes one first drive chip 208 and one second drive chip 209, a detection circuit 2010 may be arranged in the first drive chip 208, and another detection circuit 2010 may be arranged in the second drive chip 209. The detection circuit 2010, by connecting to the multiple output terminals on the first drive chip 208 or to the lines outputting drive signals from the multiple half-bridge circuits in the first drive chip 208, performs voltage and/or current detection on the multiple output terminals of the first drive chip 208 to determine the fault location and fault type, generating a detection signal. Similarly, the detection circuit 2010, by connecting to the multiple output terminals on the second drive chip 209 or to the lines outputting drive signals from the multiple half-bridge circuits in the second drive chip 209, performs voltage and/or current detection on the multiple output terminals of the second drive chip 209 to determine the fault location and fault type, generating a detection signal.

For example, the detectable fault types may include: over current (Over current), open load (Open load), short circuit (Short circuit), undervoltage lockout (Undervoltage Lockout), overvoltage lockout (Overvoltage Lockout), thermal shutdown (Thermal shutdown), and the like.

The detection circuit 3010 can detect whether the voltage and/or current of the drive signals output by the output terminals of the drive chip are within a preset range and generate a detection signal indicating normal detection or a detection signal indicating abnormal detection based on the detection results, sending it to the drive control circuit 201 in the drive chip for processing.

Further, the drive control circuit 201 may also send the detection signal to the MCU through the SO output terminal 2041, enabling the MCU to trigger corresponding protection mechanisms.

In some embodiments, the drive control circuit 201 is further configured to receive the detection signal and, when the detection signal indicates an abnormality at an output terminal of one of the half-bridge circuits, adjust the control signal corresponding to such half-bridge circuit to adjust the operating state of such half-bridge circuit.

In an embodiment of this disclosure, after the detection circuit 2010 in the drive chip performs voltage and/or current detection on the drive signals output by each output terminal, it can number the output terminal with an abnormality and inform the drive control circuit 201, enabling the drive control circuit 201 to make corresponding adjustments. For example, referring to FIG. 6, if the first half-bridge circuit 2051 is supposed to output a high-side drive signal through the first output terminal 2031, but the detection circuit 3010 detects that the drive signal output by the first output terminal 2031 is not a high-side drive signal, it can include the abnormality in the detection signal and send it to the drive control circuit 201, causing the drive control circuit 201 to adjust the control signal sent to the first half-bridge circuit 2051, thereby adjusting the operating state of the first half-bridge circuit 2051 to output a high-side drive signal.

In related technologies, high-side and low-side driver modules often only function as switches, lacking comprehensive real-time fault reading and judgment, requiring additional circuits to support detection and protection strategies. An embodiment of this disclosure provides a drive circuit that integrates a detection circuit within the drive chip to perform voltage and/or current detection on the output drive signals, automatically executing the detection process and providing automatic correction functionality, reducing manual intervention, lowering measurement costs, and avoiding the impact of abnormal output drive signals on the load circuit.

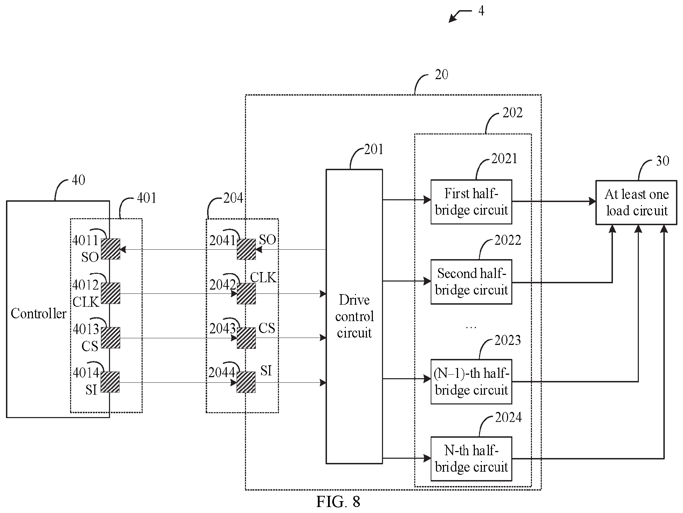

In another embodiment of this disclosure, FIG. 8 is a first schematic diagram of an assembled structure of a control apparatus 4 according to an embodiment of this disclosure. As shown in FIG. 8, the control apparatus 4 includes a controller 40 and the drive circuit 20 described in the previous embodiments.

The controller 40 is configured to provide a communication signal to the drive circuit 20.

In an embodiment of this disclosure, FIG. 8 illustrates the connection method between the drive circuit 20 and the controller with the drive circuit 20 including one drive chip as an example. The controller 40 connects to the multiple input terminals 204 of each drive chip in the drive circuit through a single SPI, outputting a communication signal to the drive circuit 20 through a communication interface 401, including: the controller 40 inputting a clock signal to the CLK input terminal 2042 of the drive circuit 20 through the CLK communication interface 4012, inputting a chip select signal to the CS input terminal 2043 of the drive circuit 20 through the CS communication interface 4013, and inputting a control signal to the SI input terminal 2044 of the drive circuit 20 through the SI communication interface 4014.

The drive circuit 20 is configured to receive the communication signal, control the operating state of the multiple half-bridge circuits based on the communication signal, and provide drive signals to at least one load circuit 30 based on the operating state of the multiple half-bridge circuits, where a drive signal for each load circuit 30 is provided by at least two of the multiple half-bridge circuits.

As described in the previous embodiments, after the drive circuit 20 receives the communication signal, the drive control circuit 201 processes the communication signal to generate multiple control signals and sends them to each half-bridge circuit to control the operating state of the multiple half-bridge circuits. Further, at least two of the multiple half-bridge circuits form an H-bridge circuit to provide a drive signal to the corresponding load circuit.

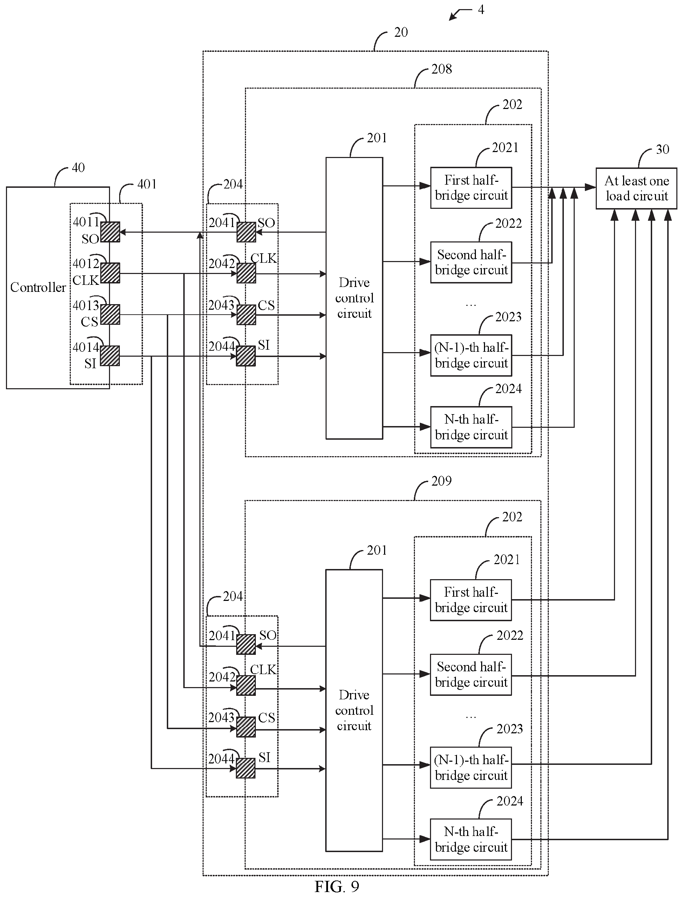

In some embodiments, FIG. 9 is a second schematic diagram of an assembled structure of a control apparatus 4 according to an embodiment of this disclosure. When the multiple half-bridge circuits in the drive circuit 20 are located on at least one drive chip, a communication terminal of the at least one drive chip is connected to a communication terminal of the controller to receive the communication signal sent by the controller.

In an embodiment of this disclosure, FIG. 9 illustrates the connection method between the drive circuit 20 and the controller with the drive circuit 20 including two drive chips as an example. As shown in FIG. 8, the multiple input terminals 204 of the drive chip 208 and the multiple input terminals 204 of the drive chip 209 are all connected to the same set of communication interfaces 401 of the controller 40. It should be understood that when the drive circuit includes multiple drive chips, the SO input terminal of each drive chip is connected to the SO communication interface 4011 of the controller 40, the CLK input terminal of each drive chip is connected to the CLK communication interface 4012 of the controller 40, the CS input terminal of each drive chip is connected to the CS communication interface 4013 of the controller 40, and the SI input terminal of each drive chip is connected to the SI communication interface 4014 of the controller 40.

An embodiment of this disclosure provides a control apparatus where the controller outputs a single control signal, and the multiple half-bridge circuits in the drive circuit output multiple drive signals to drive the load circuits, achieving the effect of reusing a single communication signal from the controller, and reducing the resource contention of GPIO interfaces of the controller.

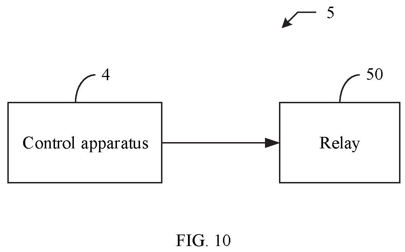

In another embodiment of this disclosure, FIG. 10 is a schematic diagram of an assembled structure of a drive system 5 according to an embodiment of this disclosure. As shown in FIG. 10, the drive system 5 includes a relay 50 and the control apparatus 4 described in the previous embodiments, where the control apparatus 4 is configured to control a switching state of the relay 50.

It should be noted that the relay 50 may be a load circuit as described in the previous embodiments, and the control apparatus 4 controls the activation or deactivation of the relay 50 by sending a high-side drive signal or a low-side drive signal to the relay 50.

An embodiment of this disclosure provides a drive system that controls a switching state of the relay through the control apparatus. Compared to the control method of using a combination of high-side and low-side chips in related technologies, this reduces the resource contention of GPIO interfaces of the controller in the control apparatus, lowers the complexity of the drive control circuit, and improves control efficiency and anti-interference capability.

It should be understood that references to "one embodiment," "an embodiment," or "some embodiments" throughout the specification mean that a particular feature, structure, or characteristic related to the embodiment is included in at least one embodiment of this disclosure. Thus, the appearances of "in one embodiment," "in an embodiment," or "in some embodiments" in various places throughout the specification do not necessarily refer to the same embodiment. Furthermore, these particular features, structures, or characteristics may be combined in any suitable manner in one or more embodiments. It should be understood that in various embodiments of this disclosure, the sequence numbers of the processes do not imply the order of execution, and the execution order of each process should be determined by its function and internal logic, without constituting any limitation on the implementation process of the embodiments of this disclosure. The sequence numbers of the embodiments of this disclosure are merely for description and do not represent the superiority or inferiority of the embodiments. The descriptions of the various embodiments above tend to emphasize the differences between the embodiments, while their similarities or identical aspects can be cross-referenced, and for brevity, they are not repeated herein.

It should be noted that in this disclosure, the terms "include," "comprise," or any other variations thereof are intended to cover non-exclusive inclusion, such that a process, method, article, or device including a series of elements includes not only those elements but also other elements not explicitly listed, or elements inherent to such a process, method, article, or device. Without further limitation, an element defined by the phrase "including a..." does not exclude the presence of additional identical elements in the process, method, article, or device that includes the element.

The sequence numbers of the embodiments of this disclosure are merely for description and do not represent the superiority or inferiority of the embodiments.

The methods disclosed in the several method embodiments provided in this disclosure can be arbitrarily combined without conflict to obtain new method embodiments.

The features disclosed in the several product embodiments provided in this disclosure can be arbitrarily combined without conflict to obtain new product embodiments.

The features disclosed in the several method or device embodiments provided in this disclosure can be arbitrarily combined without conflict to obtain new method embodiments or device embodiments.

The above description is only specific implementations of this disclosure, but the protection scope of this disclosure is not limited thereto. Any changes or substitutions that can be easily conceived by those skilled in the art within the technical scope disclosed by this disclosure should be covered by the protection scope of this disclosure. Therefore, the protection scope of this disclosure shall be subject to the protection scope of the claims.

### Industrial Applicability

This disclosure provides a drive circuit, a control apparatus, and a drive system. Through a drive control circuit, a communication signal input by an MCU is converted into multiple control signals to control multiple half-bridge circuits to output drive signals, serving as the drive for multiple load circuits. Thus, without the MCU outputting multiple hardwired control signals, multiple load circuits can be driven, reducing the resource contention of GPIO interfaces of the MCU, improving circuit control efficiency, reducing circuit complexity, and improving circuit anti-interference capability.

## Claims

1. A drive circuit, comprising a drive control circuit and multiple half-bridge circuits, wherein an output terminal of the drive control circuit is connected to the multiple half-bridge circuits, wherein:
the drive control circuit is configured to receive a communication signal and output multiple control signals; and
the multiple half-bridge circuits are configured to determine an operating state of the multiple half-bridge circuits based on the multiple control signals and provide drive signals to at least one load circuit based on the operating state of the multiple half-bridge circuits, wherein a drive signal for each load circuit is provided by at least two of the multiple half-bridge circuits.

2. The drive circuit according to claim 1, wherein the drive circuit is provided with multiple output terminals, wherein:
each half-bridge circuit corresponds to one output terminal, and at least two output terminals of the multiple output terminals are connected to the load circuit, wherein the at least two output terminals are configured to provide corresponding drive signals to the load circuit.

3. The drive circuit according to claim 1 or 2, wherein the drive circuit comprises at least one first-type half-bridge circuit and at least one second-type half-bridge circuit, wherein:
the at least one first-type half-bridge circuit is configured to provide a first-type drive signal to the at least one load circuit; and
the at least one second-type half-bridge circuit is configured to provide a second-type drive signal to the at least one load circuit.

4. The drive circuit according to claim 3, wherein the first-type drive signal is a high-side drive signal, and the second-type drive signal is a low-side drive signal.

5. The drive circuit according to claim 3 or 4, wherein:
the at least one first-type half-bridge circuit and the at least one second-type half-bridge circuit are located on a same drive chip; or
the at least one first-type half-bridge circuit is located on at least one first drive chip, and the at least one second-type half-bridge circuit is located on at least one second drive chip.

6. The drive circuit according to claim 5, wherein when the at least one first-type half-bridge circuit and the at least one second-type half-bridge circuit are located on the same drive chip, the at least one first-type half-bridge circuit comprises a first half-bridge circuit, a second half-bridge circuit, and a third half-bridge circuit, and the at least one second-type half-bridge circuit comprises a fourth half-bridge circuit, a fifth half-bridge circuit, and a sixth half-bridge circuit, wherein:
the first half-bridge circuit and the fourth half-bridge circuit form a first H-bridge circuit configured to provide a drive signal to a first load circuit;
the second half-bridge circuit and the fifth half-bridge circuit form a second H-bridge circuit configured to provide a drive signal to a second load circuit; and
the third half-bridge circuit and the sixth half-bridge circuit form a third H-bridge circuit configured to provide a drive signal to a third load circuit.

7. The drive circuit according to claim 5, wherein when the at least one first-type half-bridge circuit is located on a first drive chip and the at least one second-type half-bridge circuit is located on a second drive chip, the first drive chip comprises a first half-bridge circuit, a second half-bridge circuit, a third half-bridge circuit, a fourth half-bridge circuit, a fifth half-bridge circuit, and a sixth half-bridge circuit, and the at least one second drive chip comprises a seventh half-bridge circuit, an eighth half-bridge circuit, a ninth half-bridge circuit, a tenth half-bridge circuit, an eleventh half-bridge circuit, and a twelfth half-bridge circuit, wherein:
the first half-bridge circuit and the second half-bridge circuit are connected as a first-side half-bridge circuit, the seventh half-bridge circuit and the eighth half-bridge circuit are connected as a fourth-side half-bridge circuit, and the first-side half-bridge circuit and the fourth-side half-bridge circuit form a first H-bridge circuit configured to provide a drive signal to a first load circuit;
the third half-bridge circuit and the fourth half-bridge circuit are connected as a second-side half-bridge circuit, the ninth half-bridge circuit and the tenth half-bridge circuit are connected as a fifth-side half-bridge circuit, and the second-side half-bridge circuit and the fifth-side half-bridge circuit form a second H-bridge circuit configured to provide a drive signal to a second load circuit; and
the fifth half-bridge circuit and the sixth half-bridge circuit are connected as a third-side half-bridge circuit, the eleventh half-bridge circuit and the twelfth half-bridge circuit are connected as a sixth-side half-bridge circuit, and the third-side half-bridge circuit and the sixth-side half-bridge circuit form a third H-bridge circuit configured to provide a drive signal to a third load circuit.

8. The drive circuit according to any one of claims 2 to 7, further comprising a detection circuit connected to the drive control circuit, wherein:
the detection circuit is configured to perform voltage and/or current detection on the multiple output terminals of the drive circuit and send a resulting detection signal to the drive control circuit.

9. The drive circuit according to claim 8, wherein the drive control circuit is further configured to receive the detection signal and, when the detection signal indicates an abnormality at an output terminal of one of the half-bridge circuits, adjust the control signal corresponding to said half-bridge circuit to adjust the operating state of said half-bridge circuit.

10. The drive circuit according to any one of claims 1 to 9, wherein each half-bridge circuit comprises at least a structure composed of two power switching devices.

11. The drive circuit according to any one of claims 1 to 10, further comprising multiple power supply terminals connected to a power supply, wherein:
the power supply is configured to provide power to the multiple half-bridge circuits in the drive circuit through the multiple power supply terminals.

12. A control apparatus, comprising a controller and the drive circuit according to any one of claims 1 to 11, wherein:
the controller is configured to provide a communication signal to the drive circuit; and
the drive circuit is configured to receive the communication signal, control the operating state of the multiple half-bridge circuits based on the communication signal, and provide drive signals to at least one load circuit based on the operating state of the multiple half-bridge circuits, wherein a drive signal for each load circuit is provided by at least two of the multiple half-bridge circuits.

13. The control apparatus according to claim 12, wherein when the multiple half-bridge circuits in the drive circuit are located on at least one drive chip, a communication terminal of the at least one drive chip is connected to a communication terminal of the controller to receive the communication signal sent by the controller.

14. The control apparatus according to claim 13, wherein the communication terminal includes at least one of the following: a signal input terminal SI, a signal output terminal SO, a clock terminal CLK, or a chip select terminal CS.

15. A drive system, comprising a relay and the control apparatus according to any one of claims 12 to 14, wherein the control apparatus is configured to control a switching state of the relay.
